# EUROPÄISCHE PATENTANMELDUNG

(11) **EP 2 186 781 A1**
(43) Veröffentlichungstag der Anmeldung: **19.05.2010**
(21) Anmeldenummer: 09172281.9
(22) Anmeldetag: 06.10.2009
(51) Int. Cl.: C03B 23/04, C03B 23/11, C03C 23/00

(54) **Verfahren zur Herstellung von Pharmapackmitteln**

(30) Priorität: 09.10.2008 DE 102008051614
(71) Anmelder: Schott AG, 55122 Mainz (DE)
(72) Erfinder: Brack, Heike, 55257, Budenheim (DE); Rothhaar, Uwe, 67134, Birkenheide (DE); Tratzky, Stephan, 92660, Neustadt an der Waldnaab (DE); Thürk, Jürgen, 9008, St. Gallen (CH)
(74) Vertreter: Witte, Weller & Partner

(57) **Zusammenfassung**

Es wird ein Verfahren zur Herstellung von Packmitteln aus Glas für Pharmaprodukte und medizinische Produkte mit den folgenden Schritten angegeben: Bereitstellen eines Röhrchens aus einem Basisglas, das an seiner Innenoberfläche mit einer temporären Trennschicht versehen ist; Heißumformen des Röhrchens bei einer Temperatur oberhalb von Tg und Abkühlen des Röhrchens auf Raumtemperatur (Fig. 7).

## Beschreibung

Die Erfindung betrifft ein Verfahren zur Herstellung von Packmitteln aus Glas für Pharmaprodukte und medizinische Produkte, bei dem ein Röhrchen aus einem Basisglas, wie etwa Borosilikatglas, durch Heißumformen zu einem Glasprodukt umgeformt wird.

Glasröhrchen sind seit vielen Jahren als Pharmapackmittel und Packmittel für medizinische Produkte, wie etwa Spritzen, Ampullen usw., gebräuchlich. Hierzu werden zunächst dünne Glasrohre aus der Schmelze gezogen und diese in einem weiteren Verarbeitungsschritt durch Heißumformen zu dem Endprodukt umgeformt. Für eine großtechnologische Herstellung werden in der Regel Borosilikatgläser verwendet, da diese eine relativ gute chemische Beständigkeit aufweisen. Allerdings hat sich gezeigt, dass die Oberflächenqualität nicht immer für alle Anforderungen ausreichend hoch ist.

Aus Quarzglas hergestellte Röhrchen weisen diesen Nachteil zwar nicht auf, da sie eine hohe chemische Beständigkeit besitzen, jedoch lässt sich Quarzglas nur unter hohem Aufwand herstellen und verarbeiten, so dass es für eine wirtschaftliche Großserienfertigung nicht geeignet ist.

Zur Vermeidung der mit Quarzglas zusammenhängenden Nachteile wurde versucht, rohrförmig ausgeformte Glasbehälter aus niedrig schmelzendem Glas, an ihrer Innenoberfläche permanent mit einer amorphen Siliziumoxidschicht oder einer anderen Oxidschicht zu versehen, wodurch eine sehr beständige Innenoberfläche erzielt werden soll (vgl. DE 198 01 861 A1).

Hierbei wird die Innenoberfläche des Halbfabrikat-Glasrohres mit oxidischen Materialien (SiO₂, Al₂O₃, TiO₂ oder Mischungen davon) in einer Schichtdicke beschichtet, die an die nachfolgenden Umformbedingungen für den Glasformkörper und die Anforderungen an die chemische Resistenz angepasst ist. Anschließend wird der Glasformkörper durch Umformen des innen beschichteten Halbfabrikat-Glasrohrs hergestellt. Die Beschichtung der Innenoberfläche kann aus der Flüssigkeitsphase nach dem Sol-Gel-Verfahren oder durch Abscheiden aus einer mit dem oxidischen Beschichtungsmaterial übersättigten Lösung erfolgen. Bevorzugt erfolgt die Beschichtung der Innenoberfläche jedoch durch chemische Abscheidung des oxidischen Beschichtungsmaterials aus dessen Gasphase (CVD-Verfahren).

Während eine Abscheidung aus der Gasphase für eine Großserienfertigung ein sehr aufwändiges und teures Verfahren darstellt, haben sich bei der Beschichtung der Innenoberfläche nach dem Sol-Gel-Verfahren nicht immer zufriedenstellende Lösungen mit ausreichender chemischer Beständigkeit ergeben.

Ferner ist es im Stand der Technik bekannt (vgl. DE 1 421 844), eine Bedampfung mit sauren Gasen (Schwefeloxid oder Halogensäuregase) bei erhöhter Temperatur zu verwenden, um eine Alkaliverarmung der Oberfläche von Soda-Tonerde-Silikatgläsern zu erreichen und damit eine erhöhte Beständigkeit bzw. mechanische Festigkeit der Glasprodukte zu erzielen.

Vor diesem Hintergrund liegt der Erfindung die Aufgabe zugrunde, ein Verfahren zur Herstellung von Packmitteln aus Glas für Pharmaprodukte und medizinische Produkte anzugeben, das für eine Großserienfertigung geeignet ist und eine möglichst einfache und kostengünstige Herstellung derartiger Packmittel mit einer möglichst hohen Oberflächenqualität ermöglicht.

Diese Aufgabe wird durch ein Verfahren zur Herstellung von Packmitteln aus Glas für Pharmaprodukte und medizinische Produkte mit den folgenden Schritten gelöst:
(a) Bereitstellen eines Röhrchens aus einem Basisglas, das an seiner Innenoberfläche mit einer temporären Trennschicht versehen ist;
(b) Heißumformen des Röhrchens bei einer Temperatur oberhalb der Glastransformationstemperatur T_{g} und
(c) Abkühlen des Röhrchens auf Raumtemperatur.

Die Aufgabe der Erfindung wird auf diese Weise vollkommen gelöst.

Es wurde festgestellt, dass während des Heißumformens des Röhrchens, insbesondere bei Borosilikatgläsern, Borate verdampfen, an den Rohrinnenoberflächen kondensieren und in Wechselwirkung mit dem Glas treten. Durch den Angriff auf die Innenoberfläche der Glasröhrchen ergibt sich eine deutliche Verschlechterung der Oberflächengüte und eine erhöhte Auslauganfälligkeit.

Indem eine temporäre Schutzschicht auf der Innenoberfläche der Glasrohre vor dem Heißumformprozess erzeugt wird, wird ein schädlicher Angriff von während des Heißumformprozesses abgedampften Materialien verhindert. Ein weiterer Vorteil der Trennschicht besteht darin, dass sie das Anhaften von losen Partikeln, wie sie zum Bespiel beim Vereinzeln der Rohre entstehen, vermeidet oder zumindest reduziert.

Somit werden einerseits die boratinduzierten Oberflächendefekte wie Korrosionsmulden und Anglasungen vermindert oder gar verhindert und andererseits tritt keine nachteilige Modifizierung der oberflächennahen Zone auf ("altered layer").

Im Ergebnis wird insbesondere eine verbesserte morphologische Oberflächegüte erzielt. Daneben werden auch die Alkali-Auslaugwerte verbessert.

Die temporäre Trennschicht wird in einer weiteren Ausgestaltung der Erfindung bereits während der Herstellung des Röhrchens, also etwa während des Rohrziehens, in-situ durch Begasung mit einem sauren Gas, etwa SO2, oder durch Beflammung mit Gasbrennern, etwa durch Propangas, erzeugt.

Hierdurch ergibt sich der Vorteil, dass die Erzeugung der Trennschicht mit der Rohrherstellung kombiniert werden kann, so dass sich praktisch keine Verzögerung bei der Herstellung ergibt.

Alternativ kann die temporäre Trennschicht auch nach der Rohrherstellung, vorzugsweise an bereits vereinzelten Röhrchen, erzeugt werden.

Auf diese Weise kann eine Entkopplung zwischen der Rohrherstellung und der Erzeugung der Trennschicht erreicht werden.

Die temporäre Schutzschicht kann später beispielsweise durch einen Waschschritt entfernt werden.

Da die abwaschbare Trennschicht ohne weiteres bei dem später ohnehin notwendigen Waschschritt vor Befüllung der Packmittel mit Pharmaprodukten oder medizinischen Produkten entfernt werden kann, ist ein sehr einfacher und kostengünstiger Herstellungsprozess gewährleistet, praktisch ohne dass zusätzliche Kosten anfallen. Es wird erfindungsgemäß also gleichzeitig die Qualität der Glasinnenoberfläche verbessert und die Auslaugbeständigkeit erhöht.

Das Basisglas ist vorzugsweise ein Borosilikatglas, wobei die Heißumformung vorzugsweise bei einer Temperatur von 1000°C bis 1300°C, vorzugsweise bei 1100°C bis 1300°C, durchgeführt wird.

Soweit die Trennschicht durch Einsprühen einer Salzlösung erzeugt wird, können die Salze hierbei als Lösung vor der Heißumformung in das entsprechende Rohrstück eingesprüht werden.

Die Art und Weise, wie die temporäre Trennschicht erzeugt wird, ist nicht von grundsätzlicher Bedeutung. Die Trennschicht während des Heißumformprozesses als Schutzschicht blockiert den Angriff von Bor-Sauerstoffhaltigen Partikeln auf die Glasoberfläche. So wird auf jeden Fall eine Reduzierung des schädlichen Angriffs abgedampfter Glasbestandteile während des Heißumformprozesses gewährleistet.

Da die Trennschicht selbst nur temporärer Natur ist und etwa durch Abwaschen entfernt werden kann, wird die verbleibende Oberflächenschicht des herzustellenden Produktes geschützt.

In bevorzugter Ausführung der Erfindung wird die Trennschicht nach der Heißumformung des Röhrchens in einem Waschschritt entfernt.

Hierbei kann es sich beispielsweise um einen Waschschritt mit deionisiertem Wasser bei gegenüber Raumtemperatur erhöhter Temperatur handeln, vorzugsweise in einem Bereich von 50°C bis 70°C.

Diese Maßnahme hat den Vorteil, dass für die Entfernung der Trennschicht kein zusätzlicher Waschschritt erforderlich ist, da dieser Waschschritt mit dem ohnehin erforderlichen Waschschritt vor Benutzung des Produktes als Pharmapackmittel kombiniert werden kann.

Das erfindungsgemäße Verfahren wird vorzugsweise bei allen Glasprodukten eingesetzt, die aus Glasrohren gefertigt werden, insbesondere also für die Herstellung von Fläschchen, Spritzen, Karpulen und Ampullen oder für Glasrohre an sich.

Es wurde festgestellt, dass schon eine kurze Zeitspanne zur Herstellung der temporären Trennschicht ausreicht, also höchstens 600 Sekunden, vorzugsweise von höchstens 60 Sekunden, weiter bevorzugt von höchstens 30 Sekunden, bis hin zu höchstens 10 Sekunden.

Überraschenderweise ergibt sich nämlich ein Schutzeffekt auch bereits dann, wenn die Trennschicht nicht vollständig durchgehend, sondern nur partiell vorhanden ist.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine schematische Darstellung des Angriffs von Bor-Sauerstoffhaltigen Partikeln während des Heißumformprozesses eines herkömmlichen Pharmapackmittels aus Glas;
- Fig. 2: eine schematische Darstellung des Pharmapackmittels gemäß Fig. 1 nach dem Heißumformvorgang;
- Fig. 3: eine schematische Darstellung eines erfindungsgemäßen Pharmapackmittels unter Verwendung einer temporären Trennschicht während des Heißumformprozesses;
- Fig. 4: eine schematische Darstellung des erfindungsgemäßen Pharmapackmittels nach Entfernung der Trennschicht;
- Fig. 5: eine SEM-Aufnahme einer Innenoberfläche eines Pharmapackmittels in Form eines Glasröhrchens nach Begasung mit SO₂;
- Fig. 6: eine SEM-Aufnahme der Innenoberfläche eines herkömmlichen Pharmapackmittels ohne Trennschicht mit Borat-induzierten Korrosionseffekten;
- Fig. 7: eine Gegenüberstellung der Natrium-Auslaugwerte von herkömmlichen Pharmapackmitteln in Form von Glasröhrchen aus Borosilikatglas ohne Trennschicht (mit "Standard" bezeichnet) und von erfindungsgemäßen Pharmapackmitteln in Form von Glasröhrchen (bezeichnet mit "Erfindung"), d.h. bei dem die Röhrchen an ihrer Innenoberfläche mit **SO₂** begast wurden, bevor der Heißumformprozess erfolgte;
- Fig. 8: eine SEM-Aufnahme der Innenoberfläche eines erfindungsgemäßen Pharmapackmittels, das aus einem zuvor mit einer temporären Trennschicht versehenem Pharmapackmittel durch Heißumformen hergestellt wurde.;
- Fig. 9: eine SEM-Aufnahme der Innenoberfläche eines erfindungsgemäßen Pharmapackmittels nach einer Konditionierung mit einem Gasbrenner (vor einem Ausspülen);
- Fig. 10: eine SEM-Aufnahme der Innenoberfläche eines herkömmlichen Pharmapackmittels (vor einem Ausspülen);
- Fig. 11: eine Gegenüberstellung der Natrium-Auslaugwerte in mg/l von herkömmlichen Pharmapackmitteln in Form von Glasröhrchen ohne Trennschicht (mit "Standard" bezeichnet) und von erfindungsgemäßen Pharmapackmitteln in Form von Glasröhrchen (bezeichnet mit "Erfindung"), d.h. bei dem die Glasröhrchen an ihrer Innenoberfläche mit einer Propangasflamme beaufschlagt wurden, bevor der Heißumformprozess erfolgte und
- Fig. 12: eine SEM/EDX-Analyse (Rasterelektronenmikroskop und energiedispersive Röntgenspektroskopie) der erzeugten Trennschicht.

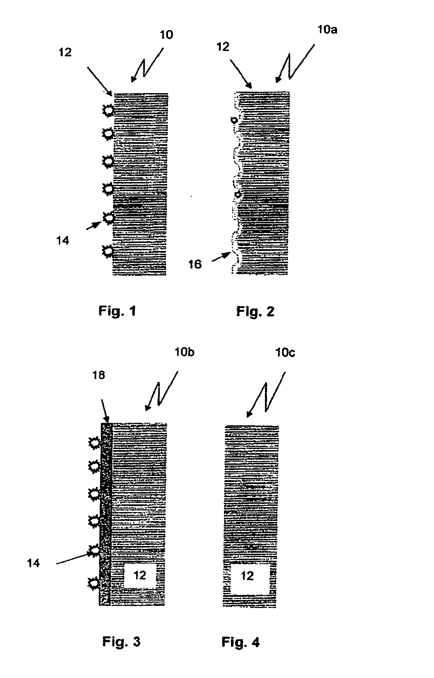

Die Figuren 1 bis 4 zeigen schematisch den Unterschied zwischen der herkömmlichen Herstellung von Glasfläschchen (Vials), die aus Glasröhrchen hergestellt werden und der erfindungsgemäßen Herstellung von Vials.

In Fig. 1 ist zum Vergleich ein Oberflächenausschnitt eines Glasröhrchens 10 gemäß dem Stand der Technik schematisch im Querschnitt dargestellt. Mit 14 ist der Angriff von Boraten auf die Glaswand 12 während der Heißumformung angedeutet.

Der Heißumformprozess führt somit gemäß Fig. 2 zu einem Glasröhrchen 10a, dessen Glaswand 12 auf der Innenseite eine Schicht 16 aufweist, die Korrosionsdefekte und Oberflächendefekte aufweist.

Im Gegensatz dazu weist ein erfindungsgemäßes Glasröhrchen 10b gemäß Fig. 3 eine Glaswand 12 mit einer temporären Trennschicht 18 auf der Rohrinnenseite auf. Während des Heißumformens wird im Wesentlichen diese Trennschicht 18 von den Boraten 14 angegriffen. Diese verhält sich aber weitgehend inert gegenüber den Boraten. Durch die temporäre Trennschicht 18 wird eine Wechselwirkung zwischen der Glasoberfläche und den borsäurehaltigen Kondensaten-/Dämpfen und letztlich eine Glaskorrosion verhindert.

Fig. 4 zeigt einen Ausschnitt der Wandung des Glasröhrchens 10c nach dem Abwaschen der Trennschicht 18 mit deionisiertem Wasser bei 60 °C.

### Beispiel 1

Die Innenoberfläche von Glasröhrchen aus Borosilikatglas (Typ Fiolax®, von der Anmelderin hergestellt und vertrieben) wurde bei 600°C mit einer Gasmischung aus 50 % SO₂ und 50 % Luft begast, wobei die Mischung einen Wassergehalt von 40 g/m³ besaß. Die Dauer der SO₂-Begasung betrug 600 Sekunden. Aus den so begasten Rohrstücken wurden mit einer Umformmaschine bei einer Temperatur von etwa 1200°C Glasfläschchen (Vials) der gewünschten Dimension erzeugt. Die Innenoberflächen mit und ohne SO₂-Begasung wurden mittels Rasterelektronenmikroskopie (SEM) untersucht. Nach dem Umformungsprozess wurden die Glasröhrchen 10 Minuten bei 60°C mit deionisiertem Wasser gespült. Abschließend wurde die Natriumauslaugung der herkömmlichen Glasröhrchen und der erfindungsgemäßen Glasröhrchen mittels Autoklavierung (60 Minuten bei 121°C mit deionisiertem Wasser) geprüft.

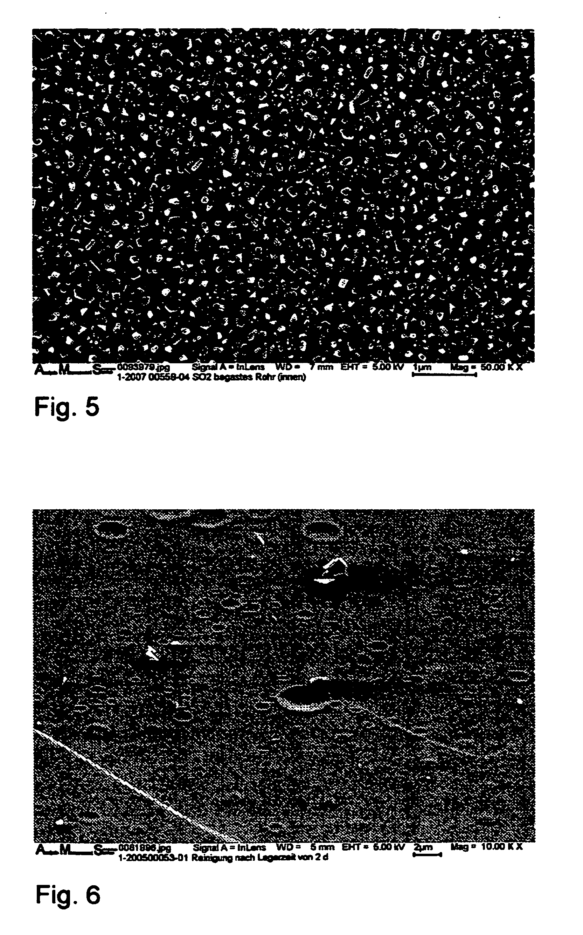

An den "begasten" Rohroberflächen wird (vor der Umformung) eine dichte Belegung mit Kristallen beobachtet, wie SEM-Aufnahme in Fig. 5 zeigt. Die Kristalle mit Durchmessern von einigen 10 nm bis 100 nm bestehen überwiegend aus Natrium, Schwefel und Sauerstoff (NaₓSO_{y}).

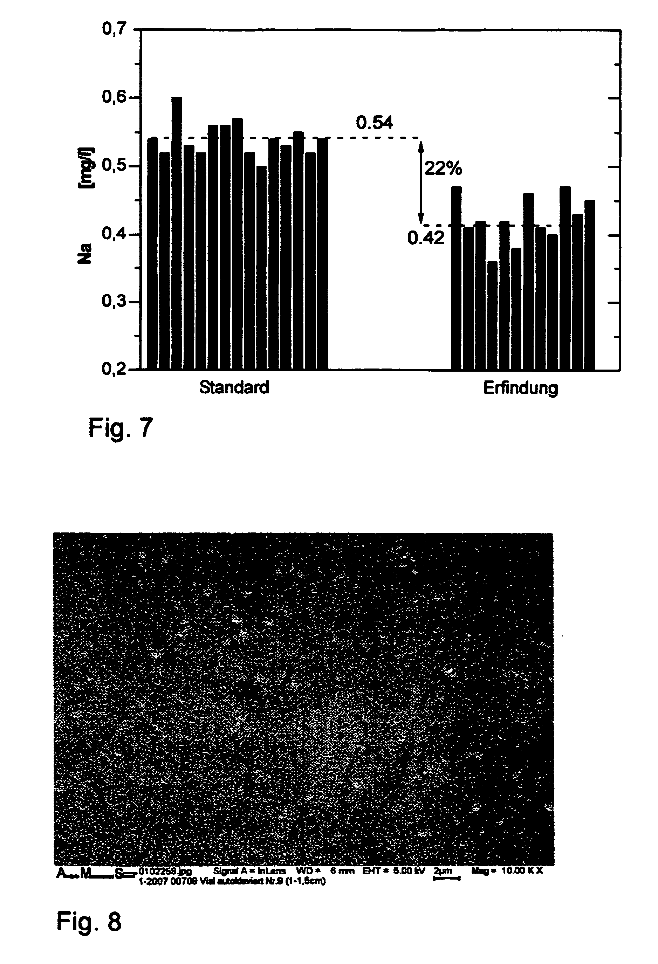

Oberflächendefekte, wie sie typischerweise bei herkömmlichen Glasröhrchen hervorgerufen werden (vgl. Fig. 6) sind auf den Glasröhrchen aus "begasten" Rohren nicht oder deutlich schwächer zu beobachten (vgl. Fig. 8).

Die Auslaugung von Glasröhrchen, die durch Begasung mit SO₂ mit einer Trennschicht versehen waren, war im Durchschnitt etwa 22 % geringer als die Auslaugung von herkömmlichen Glasröhrchen (vgl. Natriumauslaugung gemäß Fig. 7).

Sämtliche Glasröhrchen wurden auf der gleichen Maschine und im gleichen Format geformt.

### Beispiel 2

Die Innenoberfläche von Glasröhrchen aus Borosilikatglas (Typ Fiolax®, von der Anmelderin hergestellt und vertrieben) wurde mit einer Propangasflamme behandelt, entweder (a) stationär für eine bestimmte Zeit oder (b) mit einer konstanten Durchlaufgeschwindigkeit. Aus den so konditionierten Rohrstücken wurden mittels einer Heißumformmaschine entsprechende Glasröhrchen hergestellt.

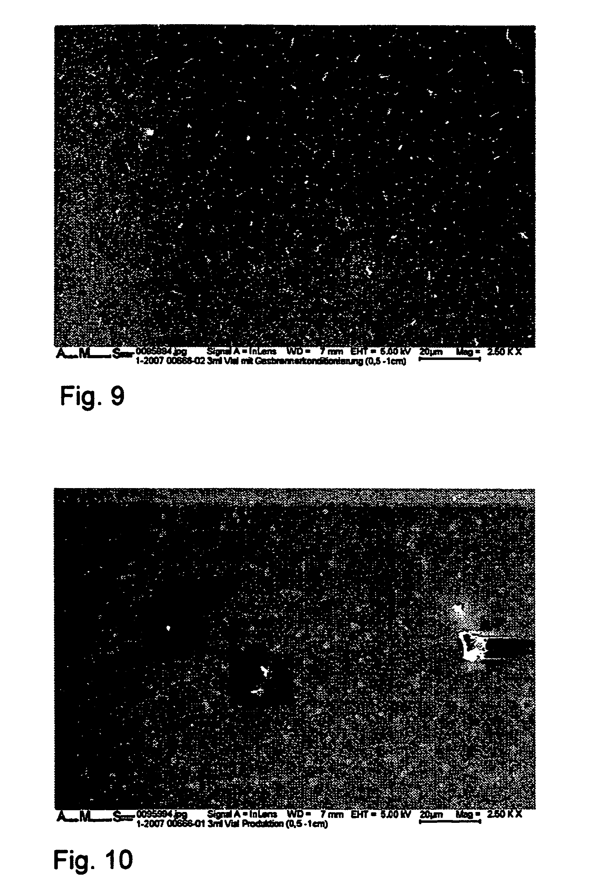

Fig. 9 zeigt eine SEM-Aufnahme der Innenoberfläche eines Glasröhrchens nach der Konditionierung mit einer Propangasflamme (vor dem Ausspülen).

Fig. 10 zeigt im Vergleich dazu eine SEM-Aufnahme der Innenoberfläche eines herkömmlichen Glasröhrchens mit starken Oberflächendefekten.

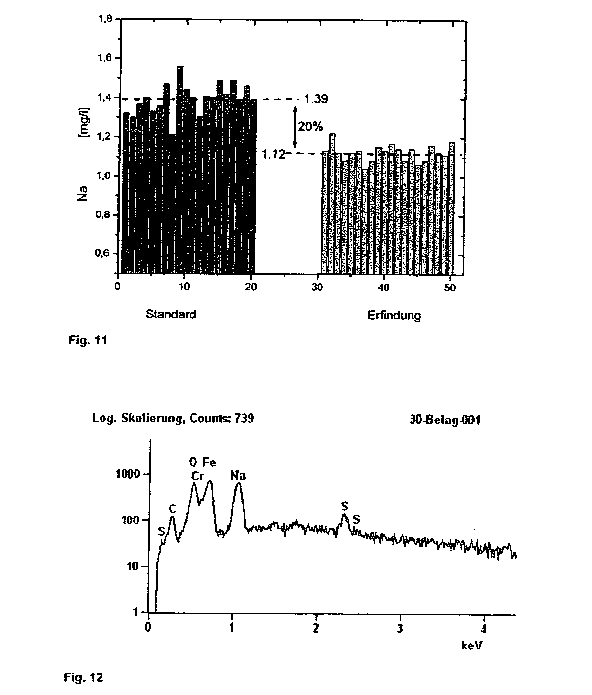

Fig. 11 zeigt die Natrium-Auslaugwerte nach Autoklavierung gemäß Beispiel 1 mit einem Vergleich von Vials geformt aus herkömmlichen Glasröhrchen ("Standard") und von erfindungsgemäß hergestellten Vials, mit einer Konditionierung durch eine Propangasflamme vor der Heißumformung ("Erfindung").

Die Natriumauslaugung ist bei den erfindungsgemäß hergestellten Glasröhrchen im Durchschnitt etwa 20% niedriger.

Fig. 12 zeigt eine Untersuchung der temporären Trennschicht nach der Beflammung mit dem Propangasbrenner mittels Rasterelektronenmikroskopie und energiedispersiver Röntgenspektroskopie (SEM/EDX). Danach enthält die erzeugte Trennschicht die Elemente Na, S und O (Fe und Cr analysebedingt durch die Trägerplatte). Es handelt sich um eine Natriumsulfatschicht (NaₓSO_{y}).

## Patentansprüche

1. Verfahren zur Herstellung von Packmitteln aus Glas für Pharmaprodukte mit den folgenden Schritten:
(a) Bereitstellen eines Röhrchens aus einem Basisglas, das an seiner Innenoberfläche mit einer temporären Trennschicht versehen ist;
(b) Heißumformen des Röhrchens bei einer Temperatur oberhalb der Glastransformationstemperatur Tg und
(c) Abkühlen des Röhrchens auf Raumtemperatur.

2. Verfahren nach Anspruch 1, bei dem die temporäre Trennschicht während einer Herstellung des Röhrchens, insbesondere während des Rohrziehens, in-situ durch Begasen mit sauren Gasen oder durch eine Beflammung mit Gasbrennern erzeugt wird.

3. Verfahren nach Anspruch 1, bei dem die temporäre Trennschicht nach der Rohrherstellung, vorzugsweise an bereits vereinzelten Röhrchen, erzeugt wird.

4. Verfahren nach Anspruch 3, bei dem die temporäre Trennschicht durch eine Basung mit sauren Gasen, durch eine Beflammung mit Gasbrennern, durch einen reaktiven Plasmaprozess, durch einen Auslaugprozess oder durch Aufsprühen von Salzen erzeugt wird.

5. Verfahren nach Anspruch 4, bei dem eine temporäre Trennschicht erzeugt wird, die Glaubersalzkristalle aufweist.

6. Verfahren nach Anspruch 2 oder 4, bei dem die Trennschicht durch Begasung mittels SO₂ erzeugt wird.

7. Verfahren nach einem der vorhergehenden Ansprüche, bei dem die temporäre Trennschicht innerhalb einer Zeitspanne von höchstens 600 Sekunden, vorzugsweise von höchstens 60 Sekunden, weiter bevorzugt von höchstens 30 Sekunden, besonders bevorzugt von höchstens 10 Sekunden, erzeugt wird.

8. Verfahren nach einem der vorhergehenden Ansprüche, bei dem als Basisglas ein Borosilikatglas verwendet wird.

9. Verfahren nach einem der vorhergehenden Ansprüche, bei dem die Heißumformung bei einer Temperatur von 1000 °C bis 1300 °C, vorzugsweise bei 1100 °C bis 1300 °C durchgeführt wird.

10. Verfahren nach einem der vorhergehenden Ansprüche, bei dem die Trennschicht nach der Heißumformung des Röhrchens in einem Waschschritt entfernt wird.

11. Verfahren nach Anspruch 10, bei dem die Trennschicht in einem Waschschritt mit deionisiertem Wasser bei gegenüber Raumtemperatur erhöhter Temperatur, vorzugsweise bei etwa 50 °C bis 70 °C, entfernt wird.
